**Europäisches Patentamt**

**European Patent Office**

**Office européen des brevets**

(19)

(11) Veröffentlichungsnummer: **0 200 995**
**B1**

(12) **EUROPÄISCHE PATENTSCHRIFT**

(45) Veröffentlichungstag der Patentschrift:
**11.07.90**

(21) Anmeldenummer: **86105594.5**

(22) Anmeldetag: **23.04.86**

(51) Int. Cl.⁵: **H01F 41/06, H02G 1/12**

(54) Wickelautomat zum Wickeln von Spulen.

(30) Priorität: **26.04.85 DE 3515223**

(43) Veröffentlichungstag der Anmeldung:
**17.12.86 Patentblatt 86/46**

(45) Bekanntmachung des Hinweises auf die Patenterteilung:
**11.07.90 Patentblatt 90/28**

(84) Benannte Vertragsstaaten:
**BE CH DE FR GB IT LI**

(56) Entgegenhaltungen:
**BE-A- 506 204**
**DE-A- 2 817 727**
**US-A- 1 784 298**
**US-A- 2 671 363**
**US-A- 4 352 305**
**US-A- 4 367 774**

(73) Patentinhaber: **Siemens Aktiengesellschaft,**
**Wittelsbacherplatz 2, D-8000 München 2(DE)**

(72) Erfinder: **Putz, Wilhelm, Nordring 31,**
**D-8550 Forchheim(DE)**

## Beschreibung

Die Erfindung bezieht sich auf einen Wickelautomaten zum Wickeln von Spulen aus lackisoliertem Runddraht, wobei der Draht über eine Drahtbremse zu einer Spule geführt wird und wobei eine Vorrichtung zum Durchlaufabisolieren vorhanden ist, mit welcher die Lackbeschichtung an definierten Bereichen des Drahtes durch radial zustellbare rotierende Werkzeuge bei einer Relativbewegung zwischen Draht und Vorrichtung entfernt werden kann.

Automatisch arbeitende Wickelmaschinen sind vom Stand der Technik bekannt. Sie können als Einkanal- oder auch Mehrkanalanlagen ausgebildet sein. Mit derartigen Automaten sollen insbesondere Spulen weitgehend ohne manuellen Eingriff gewickelt werden.

Das Wickeln bei bekannten Wickelautomaten erfolgt selbsttätig über einen sogenannten Flyer. Lediglich Spulenanfang und Spulenende müssen vor der Kontaktierung mit den Anschlüssen beim Stand der Technik häufig noch per Hand abisoliert werden, da lackisolierte Drähte, insbesondere bei Verwendung von hochwarmfestem Lack, nicht ohne weiteres gelötet werden können. Es liegt nahe, hierfür bekannte Abisoliervorrichtungen in Wickelautomaten zu integrieren. Die herkömmlichen Abisoliervorrichtungen sind aber dafür nicht verwendbar.

Aus der DE-PS 2 438 854 ist eine Vorrichtung zum Abisolieren elektrischer Leiter bekannt, die eine elektrisch angetriebene rotierende Welle aufweist mit mindestens zwei konzentrisch zur Wellenachse angeordneten und radial schwenkbaren Werkzeugträgern, deren vordere, zur Schaftachse hin schwenkbaren Hebelarme Abisolierwerkzeuge tragen und deren hintere Hebelarme Fliehgewichte aufweisen. Zusätzlich sind den jeweiligen Hebel in seiner Ruhestellung haltende Federmittel vorhanden, gegen deren Kraft die jeweils hinteren Hebelarme in Kulissen geführt werden, wodurch die Werkzeugträger in ihrer Schwenkbewegung miteinander gekoppelt und zwangsgeführt sind. Bei dieser Vorrichtung sollen sich die Werkzeuge durch die Rotation aufgrund der Fliehkraft an den Drahtdurchmesser anstellen, so daß durch überlagerte Rotations- und Längsbewegung der Werkzeuge gegenüber dem Draht dessen Abisolierung bewirkt wird.

Diese bekannte Vorrichtung dient als Handgerät zum Abisolieren von Leiterenden. Aufgrund des Konstruktionsprinzips mit Fliehkraftanstellung der Werkzeuge an den Drahtdurchmesser ist ein genau reproduzierbares Arbeiten mit diesem Gerät nicht immer gewährleistet. Insbesondere bei dünnen Leitern, beispielsweise unter 1 mm, ergeben sich dadurch mehr oder weniger zufällige Ergebnisse.

Daneben ist aus der DE-OS 1 933 065 eine Vorrichtung zum Abisolieren von Lackdrähten und Kunststoffaderleitungen bekannt, bei der ein Schneidkopf als Werkzeugträger für mindestens fünf Drehstahlsegmente über ein Außengewinde relativ zu einem zylindrischen Außenteil mit innenliegender konischer Ringfläche verschraubt werden kann. Die federnd gelagerten Werkzeuge sitzen rückseitig mit einem Kugelkopf auf der Ringfläche auf und können durch Hinein- oder Herausschrauben des Schneidkopfes radial auf unterschiedliche Bearbeitungsdurchmesser eingestellt werden.

Weiterhin sind aus der US-A 4 352 305 und der US-A 4 367 774 Vorrichtungen zum Durchlaufabisolieren bekannt, bei der der Draht durch eine hohle Drehwelle läuft, auf der ein axialer Verstellkonus angeordnet ist, welcher schwenkbare Werkzeugträger an ihren den Werkzeugen abgewandten Enden abstützt. Durch axiale Verschiebung des Verstellkonus können dabei die radial zustellbaren Werkzeuge in die durch den Drahtdurchmesser vorbestimmte Position gebracht werden.

Die aus der US-A 4 352 305 und der US-A 4 367 774 vorbekannte Vorrichtung zum Durchlaufabisolieren soll unter anderem im Zusammenhang mit einer Wickelmaschine verwendbar sein. Dabei ist die Vorrichtung zum Abisolieren dem eigentlichen Wickelautomaten vorgeschaltet. Diese Vorrichtung unterscheidet sich vom Gegenstand des vorliegenden Anspruchs 1 darin, daß nicht mehrere Abisoliervorrichtungen nebeneinander offenbart sind und daß die Abisoliervorrichtung nicht unmittelbar vor der zu wickelnden Spule angeordnet ist. Sie befindet sich aufgrund ihrer Großvolumigkeit zwischen Bandvorratsbehälter und einer Drahtzugvorrichtung, mit der die Zuführung des Drahtes zu einem Wickelkopf mit Flyer geregelt wird. Zwischen Abisolierort und Wickelort liegt demzufolge eine vergleichsweise große Wegstrecke, was Ungenauigkeiten hinsichtlich der Positionierung der abzuisolierenden Stelle mit sich bringt. Die vorbekannte Vorrichtung ist deshalb insbesondere nicht für Mehrkanal-Wickelautomaten für Präzisionsspulen geeignet.

Aufgabe der Erfindung ist es daher, einen Wickelautomaten anzugeben, bei dem in den einzelnen Kanälen unmittelbar vor dem Wickelkopf ein mechanisches Abisolieren des lackisolierten Drahtes erfolgen kann.

Letzteres gelingt bei einem Wickelautomaten der eingangs genannten Art mit folgenden Merkmalen:

– Die Vorrichtung zum Durchlaufabisolieren einschließlich Zustellmechanik und Antrieb ist in einem Gehäuse zwischen Drahtbremse und einem Wickelkopf mit mehreren Spulen unmittelbar vor der zu wickelnden Spule angeordnet;

– die Vorrichtung zum Durchlaufabisolieren besteht aus wenigstens drei, von dem gemeinsamen Antrieb über eine Drehwelle zur Rotation um den Draht aktivierbaren, spanabhebenden Werkzeugen, die auf an Schwenklagern mit der Drehwelle gekoppelten Werkzeugträgern angeordnet sind, über welche die Werkzeuge auf den Drahtdurchmesser zugestellt werden können, wobei auf der Welle ein axialverschiebbarer Verstellkonus angeordnet ist, der die schwenkbaren Werkzeugträger an ihren den Werkzeugen abgewandten Enden abstützt;

– mehrere Gehäuse mit je einer Vorrichtung zum Durchlaufabisolieren sind lateral im Abstand nebeneinander auf einer stationären Konsole angeordnet.

Durch die Kombination obiger Maßnahmen ist es möglich, daß mehrere kompakt aufgebaute Gehäuse mit Abisoliervorrichtungen einerseits unmittelbar vor dem jeweiligen Wickelort und andererseits nebeneinander in Mehrfach-Wickelautomaten anordbar sind. Dadurch ist der Weg des abisolierten Drahtstückes zum Verwendungsort am Spulenende bzw. -anfang jeweils minimiert. Das Abisolieren kann dabei in an sich bekannter Weise durch eine Relativbewegung zwischen dem Draht und der Vorrichtung zum Durchlaufabisolieren erfolgen. Es wird konkret alternativ durch die Bewegung des Gehäuses über den Schlitten bei angehaltenem Draht oder bei stationären Gehäusen durch den mit geringer Geschwindigkeit durchlaufenden Draht realisiert.

Bei der in den Wickelautomaten integrierten Vorrichtung zum Durchlaufabisolieren können als Werkzeuge beispielsweise drei austauschbare Messer vorhanden sein, die schräg zur Drahtachse angeordnet sind und sich gegenseitig überlappen. Alternativ können aber auch vier austauschbare Messer vorhanden sein, die gegeneinander rechtwinkelig in gleicher Ebene der Drahtachse angeordnet sind. Es hat sich gezeigt, daß dünne Drähte bis zu 0,2 mm Durchmesser mit hoher Genauigkeit bearbeitet werden können.

Vorteilhaft ist weiterhin, daß die abgespanten Späne an der Bearbeitungsstelle abgesaugt werden können, da die Vorrichtungen zum Durchlaufabisolieren jeweils in einem Gehäuse angeordnet sind. Gleichermaßen kann durch Anordnung von Saugkanälen die Absaugluft zum Kühlen des gesamten Systems aus Antriebs- und zugehöriger Verstellmechanik verwendet werden. Damit werden störende thermische Effekte völlig ausgeschaltet.

Weitere Einzelheiten und Vorteile der Erfindung ergeben sich aus der nachfolgenden Figurenbeschreibung anhand der Zeichnung in Verbindung mit weiteren Unteransprüchen. Es zeigen

FIG 1 den schematischen Aufbau einer Vorrichtung zum Abisolieren, die mit ihren wesentlichen Merkmalen vom Stand der Technik vorbekannt ist,

FIG 2 einen Schnitt durch eine Vorrichtung, die erfindungsgemäß in einem Gehäuse in einen Wickelautomaten integrierbar ist,

FIG 3 und 5 zwei verschiedene Messeranordnungen in der Draufsicht,

FIG 4 und 6 Schnittdarstellungen IV–IV bzw. VI–VI der FIG 3 und 5 und die

FIG 7 und 8 zwei zueinander senkrechte Ansichten eines Wickelautomaten gemäß der Erfindung.

In den Figuren sind identische Teile mit den gleichen Bezugszeichen versehen. Die Figuren werden teilweise zusammen beschrieben.

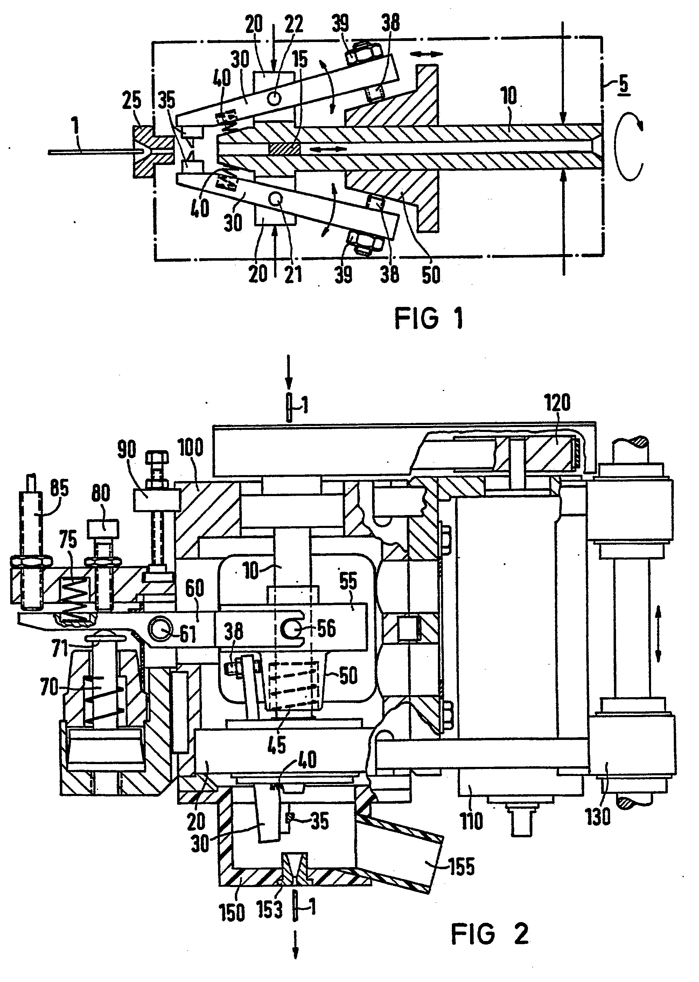

In FIG 1 ist eine schematisch dargestellte Abisoliervorrichtung für einen lackisolierten Draht 1 mit 5 bezeichnet. Sie besteht im wesentlichen aus einer Drehwelle 10, die bei den Pfeilmarkierungen gelagert und an einen nicht im einzelnen dargestellten Antrieb angekoppelt ist. Insbesondere kann der Antrieb als Druckluftmotor in fluchtender Linie mit der Welle 10 ausgebildet sein. Im vorderen Bereich weist die Welle 10 einen ringförmigen Ansatz 20 auf. Am Ansatzring 20 werden azimutal um den Umfang verteilt mehrere Lager gebildet, von denen zwei Lager 21 und 22 erkennbar sind. In den Lagern 21 und 22 sind hebelförmige Werkzeugträger 30 schwenkbar befestigt. Die Werkzeugträger 30 weisen am vorderen Ende als Werkzeuge 35 Messer auf, die aus Grundkörpern und darin eingelassenen Schneiden bestehen. An ihren den Messern 35 abgewandten Enden haben die Werkzeugträger 30 je einen Gewindestift 38 als Gegenlager, welcher mittels einer Stellmutter 39 in Querrichtung zum Werkzeugträger 30 einstellbar ist. Zum Messer 35 hin werden die Werkzeugträger 30 durch Federn 40 gehalten.

Auf der Welle 10 ist in der Höhe des rückwärtigen Endes der Werkzeugträger 30 ein gegenüber der Hohlwelle 10 axial verschiebbarer Verstellkonus 50 angeordnet. Die Gewindestifte 38 der Werkzeugträger liegen auf der Kegelfläche des Verstellkonus 50 auf und werden dadurch abgestützt. Die axiale Lage des Verstellkonus definiert dabei die Schwenklage der Werkzeugträger 30 und damit den radialen Abstand der Werkzeuge 35 zum abzuisolierenden Draht. Auch bei schneller Rotation der Drehwelle 10 haben also die Werkzeugträger 30 mit den Messern 35 eine definierte Lage, welche jeweils durch die axiale Einstellung des Verstellkonus 50 bestimmt ist.

In FIG 1 ist die Drehwelle 10 speziell als Hohlwelle ausgebildet, so daß der Runddraht 1 durch das innere Lumen entweder hindurchlaufen oder zumindest in das Lumen eintauchen kann. Speziell zum Abisolieren von Drahtenden vorgegebener Länge ist in der Hohlwelle 10 ein Schaltelement 15 angeordnet, mit dem die Verschiebung von Verstellkonus und die Aktivierung des Antriebes ausgelöst werden kann. Weiterhin ist eine Einführhilfe 25 axial zur Abisoliervorrichtung 5 angebracht, mit der der Draht 1 zentrich zwischen die Messer 35 hindurchgeschoben werden kann.

In FIG 1 ist der Verstellkonus 50 in seiner Betriebslage dargestellt, so daß die Messer 35 auf den Drahtdurchmesser zugestellt sind. Wird dagegen der Verstellkonus 50 verschoben, liegen die Gewindestifte 38 der Messerträger 30 am kleineren Durchmesserbereich des Verstellkonus 50 auf, so daß die Messer 35 vom Drahtdurchmesser abgehoben sind und einen Freiraum für das Einschieben eines Drahtes lassen. Der Draht kann dann manuell oder mit einer mechanischen Führungsvorrichtung eingeschoben werden, wobei er bei Eindringen in das innere Lumen der Welle 10 bei Erreichen einer vorgegebenen Tiefe den Schalter 15 betätigt. Damit wird eine Verschiebung des Verstellkonus 50 in die dargestellte Endlage ausgelöst, wobei hier die Gewindestifte 38 der Werkzeugträger 30 am großen Durchmesserbereich des Verstellkonus 50 abgestützt sind. In dieser Position bewirken die um den Draht rotierenden Messer 35 ein Abspanen der Isolationsschicht, wobei die weiterhin notwendige Relativbewegung von Draht 1 und Messer 35 entweder durch den Drahtvorlauf oder durch eine zugehörige Führungsvorrichtung erfolgt.

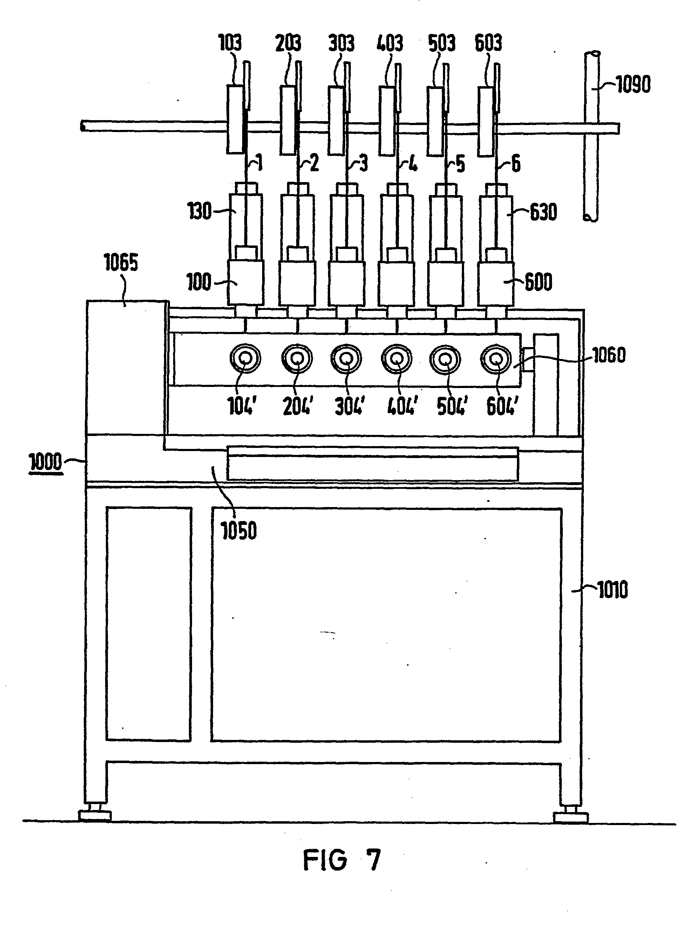

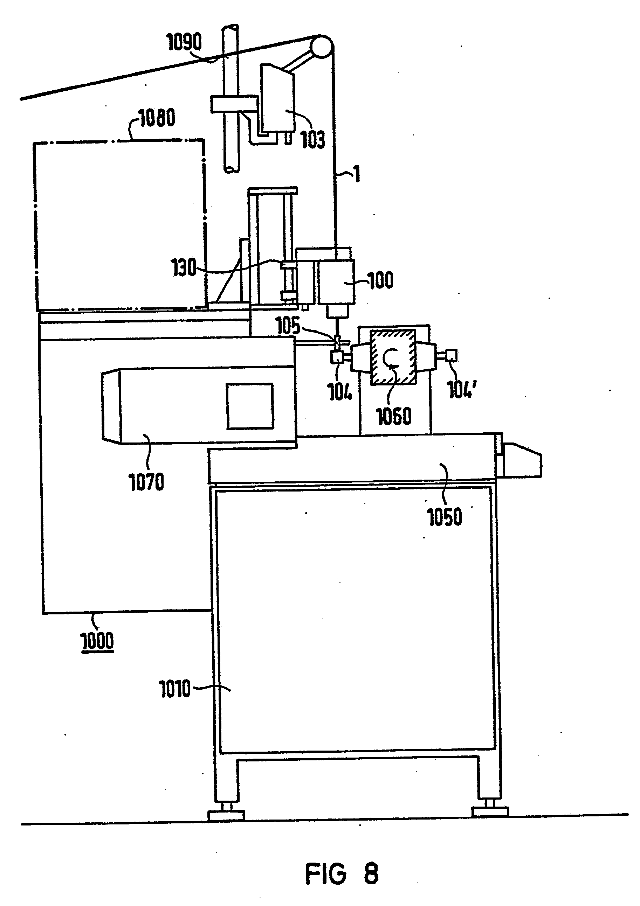

In FIG 2 ist eine derartige Vorrichtung für das Durchlaufabisolieren von Drähten dargestellt und wird als solche in einen Wickelautomaten integriert, was anhand der Figuren 7 und 8 weiter unten beschrieben wird. Mit 100 ist ein Gehäuse bezeichnet, in welchem die oben bereits beschriebene Anordnung aus als Hohlwelle ausgebildete Drehwelle 10 und Verstellkonus 50 zweifach gelagert ist. Weiterhin sind im Gehäuse 100 das zugehörige Antriebs- und Einstellmittel vorhanden. Parallel zur Drehwelle 10 liegt ein Elektromotor 110, von dem die Rotationsbewegung über einen Zahnriementrieb 120 auf die Drehwelle 10 übertragen wird. Unterhalb des Motors befindet sich eine Schlittenführung 130 über die das gesamte Gehäuse 100 durch nichtdargestellte Antriebsmittel in Richtung des Doppelpfeils bewegt werden kann.

Aus FIG 2 ist ersichtlich, daß der Verstellkonus 50 an seiner breitesten Stelle einen Ansatz 55 mit Zapfen 56 aufweist. Auf dem Zapfen 56 ist eine Gabel 60 aufgesteckt, die um einen bezüglich des Gehäuses 100 festen Drehpunkt 61 kippbar gelagert ist. Durch Hebelwirkung kann die Gabel 60 betätigt und damit der Verstellkonus 50 bewegt werden. Zur Aktivierung wird ein Pneumatikzylinder 70 mit einem Druckelement 71 verwendet, das auf dem dem Verstellkonus 50 abgewandten Teil der Gabel 60 aufliegt. Gegenüber befindet sich auf der Rückseite der Gabel 60 eine Anschlagschraube 80 als Gegendruckelement für den Pneumatikzylinder 70 sowie ein Schalter 85. Weiterhin ist eine Schraubenfeder 75 vorhanden, die bei Abschaltung des Pneumatikzylinders 70 die Gabel 60 in die Ausgangsposition zurückbewegt.

Entsprechend FIG 1 weist die Hohlwelle 10 im vorderen Teil einen Lagerbund 20 auf, der als Befestigungs- und Drehpunkt für die Werkzeugträger 30 dient. Der Übersichtlichkeit wegen ist lediglich einer von den Werkzeugträgern 30 dargestellt, welcher entsprechend FIG 1 mit angedeutetem Messer als Werkzeug 35 aufgebaut ist und durch den Verstellkonus 50 abgestützt wird. Auf der anderen Seite des Drehpunktes hält eine Druckfeder 40 den Werkzeugträger 30 in der durch den Verstellkonus 50 vorgegebenen Lage, wobei innerhalb des Verstellkonus 50 eine weitere Druckfeder 45 zu dessen Fixierung vorhanden ist.

Durch die beschriebene mechanische Anordnung ist es möglich, den Verstellkonus 50 mittels einer Verstellschraube 90 in eine definierte Lage relativ zur Hohlwelle 10 einzujustieren. Nach Einstellung auf den Drahtdurchmesser wird durch den Pneumatikzylinder 70 nach Ausfahren des Druckelementes 71 diese definierte Lage angestellt, wobei gleichzeitig der Drehantrieb betätigt ist.

Die Vorrichtung gemäß FIG 2 dient zum Durchlaufabisolieren bei automatisch arbeitenden Wickelmaschinen, bei denen im Ruhezustand der Werkzeuge 35 der isolierte Runddraht 1 zentrisch durch die bei dieser Ausführungsform zwingend vorhandene Hohlwelle 10 hindurchführbar und beispielsweise auf einen (nicht dargestellten) Spulenkörper aufwickelbar ist. Nur bestimmte Bereiche des Runddrahtes 1, die jeweils einen End- bzw. Anfangsbereich einer Spule bilden, sollen abisoliert werden. Dazu können bei durchlaufendem Draht 1 in beschriebener Weise der Verstellkonus 50 verschoben und die Werkzeuge 35 aktiviert werden. Bei stillstehendem Draht kann die erforderliche Relativbewegung zwischen Draht und Werkzeugen auch durch die Verschiebung des Gehäuses 100 über den Schlitten 130 erfolgen, was beispielsweise durch den Schalter 85 steuerbar ist.

Durch die Ausbildung der Vorrichtung mit Schlitten 130 und zugehörigem Verschiebeantrieb läßt sich also der abzuisolierende Bereich des Drahtes 1 genau vorgeben. Beim Betrieb dieser Vorrichtung zum Durchlaufabisolieren kann dabei nach dem Wickeln der zuletzt durch die Hohlwelle 10 laufende Drahtabschnitt abisoliert und der abisolierte Draht 1 nach dem abschließenden Nachwickeln an der Wickelspule durchtrennt werden. Damit sind gleichermaßen Drahtende einer fertig gewickelten Spule und Drahtanfang für eine folgende Spule abisoliert.

In FIG 2 ist am Gehäuse um den Werkzeugbereich herum eine weitgehend geschlossene Kappe 150 angeordnet, die einen Anschluß 155 zu einer nicht dargestellten Absaugeinrichtung aufweist. Die Kappe 150 kann aus Kunststoff oder dergleichen bestehen und weist eine Öffnung 153 für den Durchlauf des Wickeldrahtes 1 auf.

Durch den Anschluß des Gehäuses 100 mit Kappe 150 an eine Absaugeinrichtung läßt sich der beim Abisolieren entstehende feinspanige Abrieb direkt entfernen. Dabei ist das Gehäuse 100 mit entsprechenden Luftzuführungswegen vorteilhaft derart ausgebildet, daß durch die Absaugluft sowohl der Motor 110 sowie auch die gesamte Verstellmechanik und die Werkzeuge gekühlt werden. Dies ist deshalb von Bedeutung, da somit thermische Effekte ausgeschlossen und damit eine Langzeitstabilität bei der Bearbeitung von dünnen Runddrähten gewährleistet werden können.

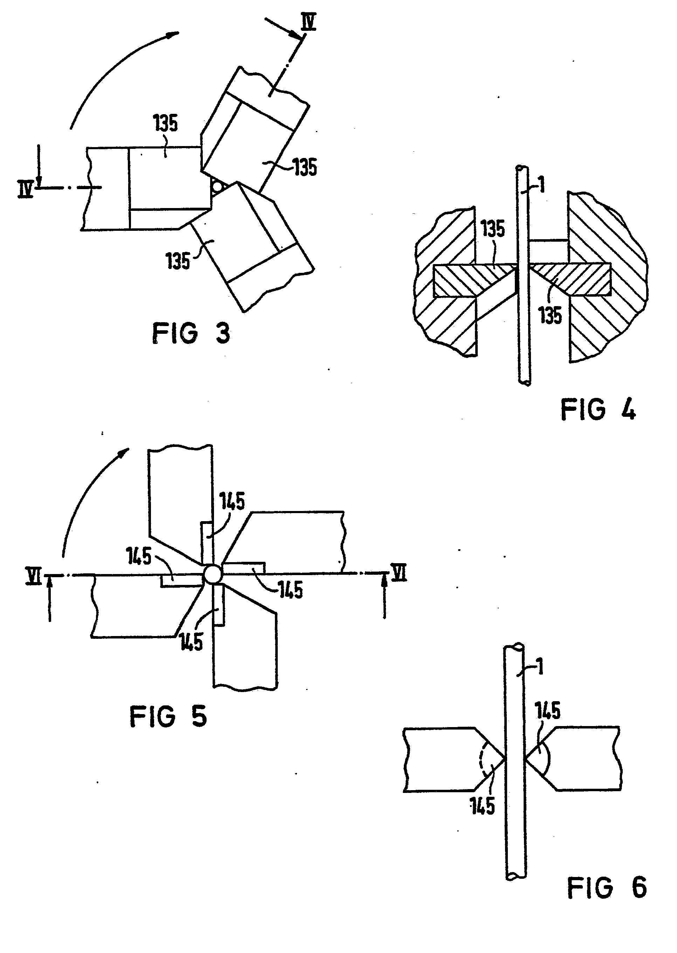

In FIG 3 sind drei Messer mit 135 bezeichnet, die mit ihren Schneiden derart schräg zur Drahtachse angeordnet sind, daß sie sich einerseits überlappen und daß andererseits die Schneidkante jeweils auf den Drahtumfang einwirkt. Bei dieser Konstruktion ist gewährleistet, daß die Messer 135 mit hoher Präzision auch bei geringem Drahtdurchmesser definiert zugestellt und um den Draht rotieren können. Es ist somit möglich, auch dünne Drähte bis zu einem Mindestdurchmesser von 0,2 mm mit einer Genauigkeit von einigen µm zu bearbeiten. Aus der Schnittdarstellung nach FIG 4 wird die Stellung der Messer 135 bezüglich des Runddrahtes noch deutlicher.

In FIG 5 sind vier Messer mit 145 bezeichnet. Die Messer 145 liegen hier in einer axialen Ebene des Drahtes und stehen zueinander rechtwinklig. Jeweils mit der Schneidenspitze greifen sie an den Außendurchmesser des Drahtes an und bewirken durch die Rotation den Abspanvorgang. Letzteres wird aus der Schnittdarstellung nach FIG 6 deutlich.

Bei den Messeranordnungen gemäß den vorangehenden Figuren wird jeweils ein Einzelmesser durch einen Grundkörper aus Stahl mit einer Schneide aus Diamant gebildet, wobei das Gesamtmesser austauschbar an Werkzeugträger befestigt ist. Die Schneidenform kann für verschiedene Anwendungen variiert und auf den jeweiligen Anwendungsfall optimiert werden. Die Anordnung aus drei schräg versetzten Messern ist hinsichtlich der Konstruktion und Einhaltung der Maßgenauigkeit vergleichsweise aufwendig. Es lassen sich aber damit Drähte mit sehr geringem Durchmesser bearbeiten. Bei größerem Durchmesser wird dagegen eine Anordnung mit vier Messern gemäß FIG 5 gewählt.

Die beschriebene Vorrichtung ist insbesondere für das Durchlaufabisolieren von Drähten geringen Durchmessers geeignet. Aufgrund des kompakten Aufbaus der Gesamtvorrichtung können in vorteilhafter Weise mehrere Einzelvorrichtungen mit Gehäuse in parallele Kanäle eines Wickelautomaten integriert werden. Letzteres wird anhand der Figuren 7 und 8 erläutert.

In FIG 7 und FIG 8 ist ein Wickelautomat mit 1000 bezeichnet, welcher aus einem Chassis 1010 mit Pneumatikeinheiten und diversen elektronischen Steuereinheiten einschließlich Display und Eingabetastatur besteht. Ein derartiger Wickelautomat ist vom Stand der Technik bekannt, so daß hierauf nicht im einzelnen eingegangen wird. Auf dem Chassis 1010 befindet sich eine Konsole 1050, die Träger eines schwenkbaren Revolverkopfes 1060 mit Schwenkantrieb 1065 ist. Am Revolverkopf 1060 sind im lateralen Abstand mehrere Spulenkerne, beispielsweise in zwei Reihen je sechs Spulenkerne 104, bzw. 104', 204', ..., 604', angeordnet, auf die über je eine Drahtführung 105 dünne lackisolierte Drähte gewickelt werden sollen. Dabei besteht das Problem, jeweils Anfang und Ende der Wickeldrähte abzuisolieren und mit den zugehörigen Kontaktstiften der Spule zu kontaktieren.

Durch Einsatz der anhand FIG 2 beschriebenen Vorrichtung zum Durchlaufabisolieren beim Wickelautomaten 1000 ist es nunmehr möglich, den Wickeldraht so zu bearbeiten, daß die abisolierte Stelle positionsgenau am gewünschten Ort der Spule zu liegen kommt. Dies ist aus FIG 8 speziell für einen Kanal erkennbar. Es bedeuten hier 100 das Gehäuse der Abisoliervorrichtung gemäß FIG 2, die über den Schlitten 130 relativ verschiebbar zur Konsole 1050 angeordnet ist. Der Wickeldraht 1 wird von einer (nicht dargestellten Vorratsrolle) über eine Drahtbremse 103 durch das Gehäuse 100 geführt und gelangt von dort über die Drahtführung 105 auf die Spule 104, welche am schwenkbaren Revolverkopf 1060 mit Schwenkantrieb 1065 angeordnet ist. Auf der anderen Seite des Revolverkopfes 1060 ist der zugehörige Spulenkern 104' zum Wechselbetrieb bei laufendem Wickelautomaten 1000 angedeutet. Weiterhin ist ein gemeinsamer motorischer Antrieb 1070 für alle Drahtführungen sowie eine gemeinsame Versorgungseinheit 1080 für alle Abisoliervorrichtungen vorhanden, welche jeweils synchron arbeiten.

Aus der Darstellung nach FIG 7 ist ersichtlich, daß der Konsole 1050 sechs Gehäuse 100, ..., 600 mit Durchlaufabisoliervorrichtungen zugeordnet sind. An einem Gestell 1090 ist jeweils die zugehörige Drahtbremse 103, 203, ..., 603 im geeigneten Abstand angebracht, über die je ein Wickeldraht 1, 2, ., 6 durch die Durchlaufabisoliervorrichtungen auf die zu wickelnden Spulen 104, 204, ..., 604 läuft.

Bei der beschriebenen Anordnung wird das Abisolieren vorteilhaft unmittelbar vor der zu wickelnden Spule durchgeführt, wobei die Relativverschiebung der Werkzeuge entlang des Drahtes über die synchrone Bewegung der Schlitten 130, 230, ..., 630 erzeugt wird. Dadurch erfolgt nunmehr das Wickeln positionsgenau, wodurch das jeweilige Kontaktieren des abisolierten Drahtes vor bzw. nach dem Wickelvorgang vereinfacht wird. Zwangsläufige Ungenauigkeiten, die beim Stand der Technik wegen des vergleichsweise längeren Weges zwischen Abisolierung des Drahtes und dem Kontaktierungsort nicht zu verhindern waren, können nicht mehr auftreten. Dadurch kann das Kontaktieren erstmalig automatisch, d.h. ohne manuelle Hilfe erfolgen.

## Patentansprüche

1. Wickelautomat zum Wickeln von Spulen (104, 104', 204', 304', 404', 504', 604') mit lackisoliertem Runddraht (1–6), wobei der Draht (1–6) über eine Drahtbremse (103, 203, 303, 403, 503, 603) zu einer Spule (104, 104'–604') geführt wird und wobei eine Vorrichtung zum Durchlaufabisolieren (10–130) vorhanden ist, mit welcher die Lackbeschichtung an definierten Bereichen des Drahtes (1–6) durch radial zustellbare rotierende Werkzeuge (35, 135, 145) bei einer Relativbewegung zwischen Draht (1–6) und Vorrichtung (10–103) entfernt werden kann, mit folgenden Merkmalen:
   - Die Vorrichtung zum Durchlaufabisolieren (10 bis 130) einschließlich Zustellmechanik (55 bis 90) und Antrieb (110) ist in einem Gehäuse (100, 600) zwischen Drahtbremse (103, 203, 303, 403, 503, 603) und einem Wickelkopf (1060) mit mehreren Spulen unmittelbar vor der zu wickelnden Spule (104, 204, 304, 404, 504, 604) angeordnet;
   - die Vorrichtung zum Durchlaufabisolieren besteht aus wenigstens drei, von dem gemeinsamen Antrieb (110) über eine Drehwelle (10) zur Rotation um den Draht (1–6) aktivierbaren, spanabhebenden Werkzeugen (35, 135, 145), die auf den Schwenklagern mit der Drehwelle (10) gekoppelten Werkzeugträgern angeordnet sind, über welche die Werkzeuge (35, 135, 145) auf den Drahtdurchmesser zugestellt werden können, wobei auf der Welle (10) ein axialverschiebbarer Verstellkonus (50) angeordnet ist, der die schwenkbaren Werkzeugträger (30) an ihren den Werkzeugen (35) abgewandten Enden abstützt;
   - mehrere Gehäuse (100, 200, 300, 400, 500, 600) mit je einer Vorrichtung zum Durchlaufabisolieren (10 bis 130) sind lateral im Abstand nebeneinander auf einer stationären Konsole (1050) angeordnet.

2. Wickelautomat nach Anspruch 1, dadurch gekennzeichnet, daß der Wickelkopf durch einen auf der Konsole (1050) schwenkbar angeordneten gemeinsamen Revolverkopf (1060) für wenigstens eine Reihe von Spulen (104, 104', 204', 304', 404', 504', 604') gebildet ist, wobei jeder Spule (104, 104', 204', 304', 404', 504; 604') eine Drahtführung (105) zugeordnet ist.

3. Wickelautomat nach Anspruch 1, dadurch gekennzeichnet, daß das Gehäuse (100, 600) einen Schlitten (130, 630) aufweist, mit dem das Gehäuse (100, 600) gegenüber der stationären Konsole (1050) verschiebbar ist.

4. Wickelautomat nach Anspruch 1, dadurch gekennzeichnet, daß das Gehäuse (100, 600) stationär angeordnet ist.

5. Wickelautomat nach Anspruch 1, dadurch gekennzeichnet, daß dem Verstellkonus (50) eine Zustellmechanik (55 bis 90) mit einem Pneumatikzylinder (70) zugeordnet ist.

6. Wickelautomat nach Anspruch 5, dadurch gekennzeichnet, daß der Pneumatikzylinder (70) mit seinem Druckelement (71) über eine Gabel (60) auf den Verstellkonus (50) einwirkt und daß Federelemente zur Rückbewegung der Zustellmechanik (55 bis 90) in die Ausgangslage nach Abschalten des Pneumatikzylinders (70) vorhanden sind.

7. Wickelautomat nach einem der vorhergehenden Ansprüche, dadurch gekennzeichnet, daß im Gehäuse (100, 600) Lüftungskanäle gebildet sind, wodurch eine Absaugeinrichtung über einen Anschlußstutzen (155) gleichermaßen Antriebsmotor (110), Drehwelle (10) mit Verstellkonus (50) und Werkzeugträgern (30), einschließlich Zustellmechanik (55 bis 90) kühlt.

8. Wickelautomat nach Anspruch 1, dadurch gekennzeichnet, daß die Vorrichtung zum Durchlaufabisolieren Stellmittel (90) zum Einjustieren der Werkzeuge (35) auf einen Drahtdurchmesser zwischen 0,2 und 1 mm aufweist.

9. Wickelautomat nach Anspruch 1, dadurch gekennzeichnet, daß als Werkzeuge drei austauschbare Messer (135) vorhanden sind, die schräg zur Achse des abzuisolierenden Drahtes (1–6) angeordnet sind und die sich gegenseitig überlappen.

10. Wickelautomat nach Anspruch 1, dadurch gekennzeichnet, daß als Werkzeuge vier austauschbare Messer (145) vorhanden sind, die zueinander rechtwinklig in gleicher Ebene zur Achse des abzuisolierenden Drahtes (1) angeordnet sind.

## Claims

1. A winding machine for winding spools (104, 104', 204', 304', 404', 504', 604') with enamelled round-wire (1–6), wherein the wire (1–6) is guided via a wire brake (103, 203, 303, 403, 503, 603) to a spool (104, 104'–604') and wherein a continuous insulation stripping device (10–130) is provided by which the enamel coating can be removed from defined regions on the wire (1–6) by radially adjustable, rotating tools (35, 135, 145) by a relative movement of the wire (1–6) and device (10–130), having the following characteristics:
   – the continuous insulation stripping device (10 to 130), including the adjusting mechanism (55 to 90) and drive (110), is arranged in a housing (100, 600) between the wire brake (103, 203, 303, 403, 503, 603) and a winding head (1060) having several spools, immediately before the spool (104, 204, 304, 404, 504, 604) to be wound;
   – the continuous insulation stripping device comprises at least three cutting tools (35, 135, 145) which can be caused to rotate about the wire (1–6) by the common drive (110) via a rotating shaft (10), and are arranged in tool holders coupled to the shaft (10) by swivel bearings by means of which the tools (35, 135, 145) can be adjusted to the diameter of the wire, an axially displaceable adjusting cone (50) being arranged on the shaft (10) which supports the pivotable tool holders (39) at their ends remote from the tools (35);
   – a plurality of housings (100, 200, 300, 400, 500, 600), each comprising a continuous insulation stripping device (10 to 130), are arranged laterally, spaced apart on a stationary console (1050).

2. A winding machine according to claim 1, characterised in that the winding head comprises a common revolving head (1060) pivotally mounted on the console (1050), for at least one row of spools (104, 104', 204', 304', 404', 504', 604'), each spool (104, 104', 204', 304', 404', 504', 604') being associated with a wire guide (105).

3. A winding machine according to claim 1, characterised in that the housing (100, 400, 600) has a carriage (130, 630) with which the housing (100, 600) can be displaced relative to the stationary console (1050).

4. A winding machine according to claim 1, characterised in that the housing (100, 600) is stationary.

5. A winding machine according to claim 1, characterised in that an adjusting mechanism (55 to 90) including a pneumatic cylinder (70) is associated with the adjusting cone /70).

6. A winding machine according to claim 5, characterised in that the pressure element (71) of the pneumatic cylinder (70) acts on the adjusting cone (50) via a fork (60) and that spring elements are provided for returning the adjusting mechanism (55 to 90) to the starting position after the pneumatic cylinder (70) has been turned off.

7. A winding machine according to any one of the preceding claims, characterised in that venting passages are made in the housing (100, 600) through which, by way of a pipe connection (155), a suction device equally cools driving motor (110), rotating shaft (10) with feed cone (50) and tool holders (30), including adjusting mechanisms (55 to 90).

8. A winding machine according to claim 1, characterised in that the continuous insulation stripping device has setting means (90) for adjusting the tools (35) to wire diameters between 0.2 and 1 mm.

9. A winding machine according to claim 1, characterised in that the tools comprise three exchangeable knives (135) which are arranged obliquely to the axis of the wire (1–6) to be stripped and which overlap one another.

10. A winding machine according to claim 1, characterised in that the tools comprise four exchangeable knives (145) which are arranged at right angles to one another in the same plane to the axis of the wire (1) to be stripped.

## Revendications

1. Automate de bobinage pour réaliser l'enroulement de bobines (104, 104', 204', 304', 404', 504', 604') avec un fil rond vernissé (1–6), et dans lequel le fil (1–6) est guidé par l'intermédiaire d'un dispositif de freinage du fil (103, 203, 303, 403, 503, 603) en direction d'une bobine (104, 104', 604'), et dans lequel il est prévu un dispositif de dénudage continu (10-130), à l'aide duquel le revêtement de vernis peut être retiré, dans des parties définies du fil (1-6), à l'aide d'outils rotatifs (35, 135, 145), qui peuvent être avancés radialement, lors d'un déplacement relatif entre le fil (1-6) et le dispositif (10-130), et qui présente les caractéristiques suivantes:

- le dispositif de dénudage continu (10 à 130) ainsi que le système mécanique d'avance (55 à 90) et le dispositif d'entraînement (110) sont disposés dans un carter (100, 600) entre le dispositif de freinage du fil (103, 203, 303, 403, 503, 603) et une tête de bobinage (1060) comportant plusieurs bobines, directement devant la bobine (104, 204, 304, 404, 504, 604) devant être bobinée;

- le dispositif de dénudage continu est constitué par au moins trois outils (35, 135, 145), qui réalisent un enlèvement de copeaux, qui peuvent être activés par le dispositif commun d'entraînement (110) au moyen d'un arbre rotatif (10) servant à exécuter une rotation autour du fil (1-6) et qui sont disposés sur des paliers pivotants comportant des porte-outils accouplés à l'arbre rotatif (10) et par l'intermédiaire desquels les outils (35, 135, 145) peuvent être avancés sur une distance égale au diamètre du fil, et dans lequel sur l'arbre (10) est disposé un cône de réglage (50) déplaçable axialement, qui supporte les porte-outils pivotants (30) sur leurs extrémités tournées à l'opposé des outils (35);

- plusieurs carters (100, 200, 300, 400, 500, 600) comportant chacun un dispositif de dénudage continu (10 à 130) sont disposés latéralement à distance les uns à côté des autres sur une console fixe (1050).

2. Automate de bobinage suivant la revendication 1, caractérisé par le fait que la tête de bobinage est formée par une tête revolver commune (1060), montée pivotante sur la console (1050) et prévue pour au moins une série de bobines (104, 104', 204', 304', 404', 504', 604'), un guide-fil (104, 105) étant associé à chaque bobine (104, 104', 204', 304', 404', 504', 604').

3. Automate de bobinage suivant la revendication 1, caractérisé par le fait que le carter (100, 600) comporte un chariot (130, 630), à l'aide duquel le carter (100, 600) peut être déplacé par rapport à la console fixe (1050).

4. Automate de bobinage suivant la revendication 1, caractérisé par le fait que le carter (100, 600) est monté fixe.

5. Automate de bobinage suivant la revendication 1, caractérisé par le fait qu'un système mécanique d'avance (55 à 90) comportant un vérin pneumatique (70) est associé au cône de réglage (50).

6. Automate de bobinage suivant la revendication 5, caractérisé par le fait que le vérin pneumatique (70) agit par son élément de pression (71), par l'intermédiaire d'une fourche (60), sur le cône de réglage (50) et qu'il est prévu des éléments de ressort servant à ramener le système mécanique de réglage (55 à 90) dans la position initiale, après débranchement du vérin pneumatique (70).

7. Automate de bobinage suivant l'une des revendications précédentes, caractérisé par le fait que des canaux d'aération sont formés dans le carter (100, 600), ce qui a pour effet qu'un dispositif d'aspiration refroidit de la même manière, par l'intermédiaire d'une tubulure de raccordement (155), le moteur d'entraînement (110), l'arbre rotatif (10) équipé du cône de réglage (50) et des porte-outils (30) ainsi que le système mécanique d'avance (55 à 90).

8. Automate de bobinage suivant la revendication 1, caractérisé par le fait que le dispositif de dénudage continu comporte des moyens de réglage (90) permettant de régler les outils (35) sur un diamètre de fil compris entre 0,2 et 1 mm.

9. Automate de bobinage suivant la revendication 1, caractérisé par le fait qu'il est prévu, comme outils, trois couteaux remplaçables (135), qui sont disposés obliquement par rapport à l'axe du fil (1-6) devant être dénudé et se chevauchent réciproquement.

10. Automate de bobinage suivant la revendication 1, caractérisé par le fait qu'il est prévu, comme outils, quatre couteaux remplaçables (145), qui sont disposés de manière à être perpendiculaires entre eux dans le même plan que l'axe du fil (1) devant être dénudé.

FIG 1

FIG 2

FIG 3

FIG 4

FIG 5

FIG 6

FIG 7

FIG 8